# EUROPEAN PATENT SPECIFICATION

(11) **EP 1 913 306 B1**
(45) Date of publication and mention of the grant of the patent: **10.06.2015**
(21) Application number: 06762661.4
(22) Date of filing: 17.07.2006
(51) Int. Cl.: F23C 1/00, F23D 11/00, F23D 14/64, F23D 14/66, F23D 17/00

(54) **INDUSTRIAL BURNER AND METHOD FOR OPERATING AN INDUSTRIAL BURNER**
INDUSTRIEBRENNER UND VERFAHREN ZUM BETRIEB EINES INDUSTRIEBRENNERS
BRULEUR INDUSTRIEL ET PROCEDE D'UTILISATION D'UN TEL BRULEUR

(30) Priority: 11.08.2005 DE 102005038110
(43) Date of publication of application: 23.04.2008
(73) Proprietor: Elster GmbH, 55252 Mainz-Kastel (DE)
(72) Inventor: SCHWEINITZ, Horst, Graf von, 44803 Bochum (DE); MUNKO, Andreas, 42107 Wuppertal (DE)
(74) Representative: Kramer Barske Schmidtchen Patentanwälte PartG mbB
(86) International application number: PCT/EP2006/007025
(87) International publication number: WO 2007/017056

(56) References cited:
- EP-A2- 0 657 693
- EP-A2- 0 685 683
- DE-A1- 10 005 256
- FR-A- 1 126 610

## Description

### TECHNICAL FIELD

The invention concerns an industrial burner with low NOx-emissions, in particular for the heating of furnace rooms of industrial furnaces. In addition, the invention concerns a method for operating such a burner.

### BACKGROUND OF THE INVENTION

For conversion of fuel energy into heat, so-called impulse or high-speed burners are used. The fuel and the combustion air are mixed together and ignited in a high-heat resistant combustion chamber manufactured mostly out of ceramic material. The resulting hot combustion gas flows through a nozzle-shaped outlet with high speed into the heating space, which is formed either by the furnace room itself or by the inner space of a radiant tube. The outlet of the combustion chamber can be constricted in a nozzle-shaped manner or can be formed by a nozzle crown, wherein the axes of the nozzle openings are parallel to each other or are oriented so as to diverge from each other. The mechanical energy of the gas stream, which is being discharged from the combustion chamber and which partially originates from the fuel, serves to mix and circulate the gases in the heating room, which further assists the temperature equalization in the desired manner. Such a burner is for example described in DE 34 22 229 A1.

Furthermore, from EP 0 293 168 A2 an industrial burner is known that includes a high-heat resistant combustion chamber disposed outside of the furnace room. The fuel guiding device includes a primary fuel nozzle, which opens at a rear wall of the combustion chamber that opposes the combustion gas outlet, and a secondary, heat-insulated fuel nozzle extending through the combustion chamber, which secondary nozzle opens near the combustion gas outlet. This burner is operated according to a two-stage combustion, wherein less than 50% of the total fuel supplied to the burner is introduced via the primary fuel nozzle into the combustion chamber, which is continually supplied with the entire amount of the combustion air. This primary fuel is burned with a high air surplus by forming a long flame that reaches up to the mouth of the secondary fuel nozzle near the outlet of the combustion chamber. The combustion of the remaining fuel introduced via the secondary fuel nozzle takes place directly in the radiant tube with a low air surplus.

Similarly, a burner operable according a two-stage operation is known from EP 0 685 683 B1, in which two fuel outlets are provided in a combustion chamber separated from each other in the axial direction; the outlets are selectively supplied with fuel in a first and in a second combustion operation state. In particular, when starting up the burner, the fuel supply device, which discharges into the combustion chamber separated from the nozzle-shaped outlet of the combustion chamber in the furnace room, is used in order to introduce fuel into the combustion chamber and to enable combustion in the combustion chamber. In the second operation state, the other of the fuel outlets is solely utilized, which introduces the fuel immediately proximate to the combustion chamber outlet, so that unburned fuel adjacent to the air arrives at the furnace room unmixed with the combustion air. The mixing of the fuel and the combustion air then first takes place in the furnace room.

DE 100 05 256 A1 discloses a burner for gaseous or fluid fuels comprising a housing and a combustion air supplier arranged within the housing. A fuel supplier is provided to introduce fuel through different openings having a first angle with respect to a longitudinal direction of the burner and being arranged in a movable burner head. The higher the pressure within the fuel supplier the movable burner head moves in a longitudinal direction of the burner. The movement results in that additional fuel nozzles are getting in flow connection with a fuel supply. Hence, fuel is being introduced via fuel nozzles having different angles. The additional fuel nozzles are being formed by lifting up the movable burner head from a corresponding seat at the fuel supplier. This kind of arrangement serves to introduce more fuel in a chamber of the burner. This type of burner does not provide the possibility to mix and burn fuel in different chambers.

In FR 1 126 610 a burner having a burner head with different fuel nozzles arranged in different angles is disclosed.

Starting therefrom, it is an object of the invention to provide an industrial burner that is simple to construct for low NOx-emissions and is flexible to operate, and a method for operating the industrial burner.

### SUMMARY OF THE INVENTION

This object is achieved according to a first aspect of the present invention by an industrial burner, comprising a mixing chamber provided with at least one opening into a furnace room through which opening at least a partially-mixed fuel flow from the mixing chamber dispenses into the furnace room during operation. The industrial burner further comprises a combustion air supplier through which the mixing chamber is supplied with combustion air during operation, and a mixing device. The industrial burner further comprises a fuel supplier including a first fuel lance and a second fuel lance. The fuel supplier is adapted to switch between a first, heating up-operation state and a second operation state. The first fuel lance is connected at its mixing chamber side with the mixing device. The first fuel lance is provided with one or more nozzle openings provided at a first angle with respect to the axial direction of the mixing chamber for introducing fuel into the mixing chamber at the first angle. The first fuel lance is adapted to introduce fuel, in the first, heating up-operation state, into the mixing chamber at an axial distance with respect to the opening of the mixing chamber into the furnace room at the first angle such that fuel and air are mixed in the mixing chamber and at least a partial reaction is carried out therein. The first fuel lance is co-axially attached to and surrounds the second fuel lance. The second fuel lance is connected at its mixing chamber side with the mixing device. The second fuel lance is provided with one or more nozzle openings provided at a second angle with respect to the axial direction of the mixing chamber. The second angle is different from the first angle, for introducing fuel into the mixing chamber at the second angle. The second fuel lance is adapted to introduce fuel, in the second operation state into the mixing chamber at substantially the same axial distance with respect to the opening as in the first operation state at least at the second angle. The fuel flows through the first fuel lance and second fuel lance are freely adjustable independent from each other and thus any arbitrary mixing ratio of the fuel flows can be supplied through the lances and can be dispensed therefrom.

The above object is achieved according to a second aspect of the present invention by a method for operating an industrial burner comprising a mixing chamber having an axial direction, the mixing chamber being provided with at least one opening into a furnace room, through which opening at least a partially-mixed fuel-air-flow from the mixing chamber dispenses into the furnace room during operation. A combustion air supplier is provided in the industrial burner, through which the mixing chamber is supplied with combustion air during operation. A fuel supplier is adapted to switch between a first, heating up-operation state and a second operation state, wherein the fuel supplier includes a first fuel lance and a second fuel lance. The first fuel lance is connected at its mixing chamber side with a mixing device, the first fuel lance being provided with one or more nozzle openings provided at a first angle with respect to the axial direction of the mixing chamber for introducing fuel into the mixing chamber at the first angle. The first fuel lance is co-axially attached to and surrounds the second fuel lance. The second fuel lance is connected at its mixing chamber side with the mixing device, the second fuel lance being provided with one or more nozzle openings provided at a second angle with respect to the axial direction of the mixing chamber, which second angle is different from the first angle, for introducing fuel into the mixing chamber at the second angle. The method comprises at least the steps of continually supplying the mixing chamber with combustion air, and freely adjusting the fuel flows through the first fuel lance and second fuel lance independent from each other. The method further comprises introducing fuel into the mixing chamber in a first, heating up-operation state at an axial distance with respect to the opening into the furnace room only at a first angle such that fuel and air are mixed in the mixing chamber and at least a partial reaction is carried out therein, and switching from the first heating up-operation state into a second operation state. In addition, the method comprises introducing fuel into the mixing chamber in the second operation state at substantially the same axial distance with respect to the opening of the mixing chamber into the furnace room as in the first operation state at least at a second angle with respect to the axial direction of the mixing chamber, such that the fuel and combustion air are premixed in the mixing chamber and the combustion is substantially shifted into the furnace room.

According to the invention, a portion of the combustion air is introduced into the mixing chamber by means of a combustion air supplier, wherein the mixing chamber can be continually supplied with combustion air. Moreover, instead of pure air, an air/exhaust mixture can be supplied, e.g. when the inventive burner is utilized as a recuperator burner. In the first operation state, the fuel is introduced into the mixing chamber at a first angle to the axial direction of the mixing chamber, i.e. the rotational axis of the combustion air inlet with respect to the opening in the furnace room, such that fuel and air are mixed in the mixing chamber and form a reaction-capable mixture. In addition, they carry out at least a partial reaction already in the mixing chamber, so that a flame results in the mixing chamber before they flow through the nozzle-shaped outlet into the furnace room. In the second operation state, fuel is introduced into the mixing chamber at a second angle that differs from the first angle, wherein the axial position, at which the fuel is introduced into the mixing chamber by the fuel supplier, remains essentially unchanged. That means, the distance between the exhaust of the fuel supplier and the opening of the mixing chamber in the furnace room in the axial direction of the mixing chamber is essentially the same in both operation states. In the second operation state, the fuel is preferably introduced into the mixing chamber through the first fuel supplier as well as the second fuel supplier. Thus, each of the fuel supplier devices comprises one or more nozzle openings that can be designed in known way to include slots, to be round or in any other suitable geometric shape.

It is ensured by this configuration that in the first operation state, a thorough mixing of the fuel and combustion air takes place in the mixing chamber and combustion can at least partially take place in the mixing chamber. On the contrary, in the second operation state, by suitably selecting the proportion of the entire fuel of the fuel stream discharging at a first angle and/or at a second angle, i.e. in particular by controlling the corresponding fuel amount and exhaust angle, it is ensured that the flow profile and thus also the mixing profile of the air and fuel, as well as the temperature profile in the mixing chamber, can be influenced such that the combustion is substantially shifted to the area outside of the mixing chamber, i.e. to the furnace room. At the same time, it is also ensured already in the mixing chamber that an at least partially pre-mixed fuel stream discharges from the mixing chamber opening into the furnace room, so that the combustion can take place there. A reaction-capable mixture is located in the mixing chamber in all operation states at least with respect to the material balance, although the mixing is not sufficient thorough, in particular in the second operation state, in order to ensure a stable combustion already in the mixing chamber. By shifting the combustion from the mixing chamber to the furnace room in the second operation state, it is possible to place fewer thermal demands on the mixing chamber itself as well as the mixing device, i.e. the fuel and air suppliers, and thus to ensure an increased service life of the components of the industrial burner and to increase the usage temperature in the furnace room.

For this purpose, in the second operation state, the fuel is preferably introduced through the second fuel supplier device in a proportion of 10% to 100%, more preferably from 50% to 100% of the entire fuel stream, wherein preferably 100% is not included, so that in the second operation state, fuel is always supplied through both fuel suppliers that open into the mixing chamber at different angles. In this case, the flow formation and the mixture formation of the fuel and the combustion air in the mixing chamber can be better influenced and calibrated or adjusted.

Preferably, the first angle for the first operation state is larger than the second angle. In an embodiment not according to the invention, it is also conceivable that the second angle can be larger than the first angle. One of the two angles can be 0°, i.e. the fuel stream discharged through one of the fuel lances is introduced into the mixing chamber in the axial direction. This allows a simple configuration of the opening of the fuel supplier into the combustion chamber, as well as the possibility of desirably influencing the flow, so that not only the usage areas of a burner can be enlarged and it is possible to protect the material of the mixing chamber, but also the exhaust emissions, in particular NOx, can be reduced by the desired flow influence. By clever selection of the angle with respect to the axial direction of the mixing chamber, in particular during the heating up process, i.e the first operation state, a higher burner performance can be achieved due to improved stability conditions and desired thorough mixing of fuel and air in the mixing chamber. The fuels are arbitrarily selectable, so that in particular oil or solid fuels are also possible in principle.

The fuel supplier comprises a first and a second fuel supplier device that are each further provided with fuel lances; the fuel lances are connected, e.g. form-fit or another way, with a mixing device on its mixing chamber side end. The mixing device common to both fuel lances comprises the nozzle openings at the first and the second angle with respect to the axial direction of the mixing chamber, which nozzle openings are connected with the first and the second fuel lances, respectively. This simplifies the assembly of the industrial burner, because only one mixing device that defines the direction of the fuel flow is necessary. At the same time, an additional apparatus can be attached to the mixing device, e.g., in order to influence the flow characteristics of the supplied air, e.g., to swirl it. Moreover, this construction guarantees that the fuel introduction into the mixing chamber in the first as well as the second operation state takes place essentially at the same axial distance with respect to the opening of the mixing chamber into the furnace room.

If a device for monitoring the combustion is provided according to a preferred embodiment, e.g. as a UV-probe or by means of an ionization method, it is thus possible to control the switching between the first and the second operation state as a function of the detected flow characteristics and/or the combustion in the mixing chamber. In particular, by monitoring the flow state into the mixing chamber in such a manner, a switching between the supply of the fuel flow for the first operation state and the second operation state at less than 800°C is also possible, which up to now has served as the critical temperature point for altering the operation conditions after heating-up.

The angle, at which the fuel is supplied in the first and second operation states, is in principle freely selectable, as long as the angles are different from each other.

According to embodiments not forming part of the invention, one can also achieve the same effect with the same angles, but e.g. with different numbers, special arrangements or shapes of the nozzle openings and/or generally by different impulse fuel inflows in the two operation states, also when the nozzles have the same angle with respect to the axial direction. Thus, even when the nozzles are disposed at identical angles, this can result in that the fuel arrives into the mixing chamber at different angles in the first and second operation states.

### BRIEF DESCRIPTION OF THE DRAWINGS

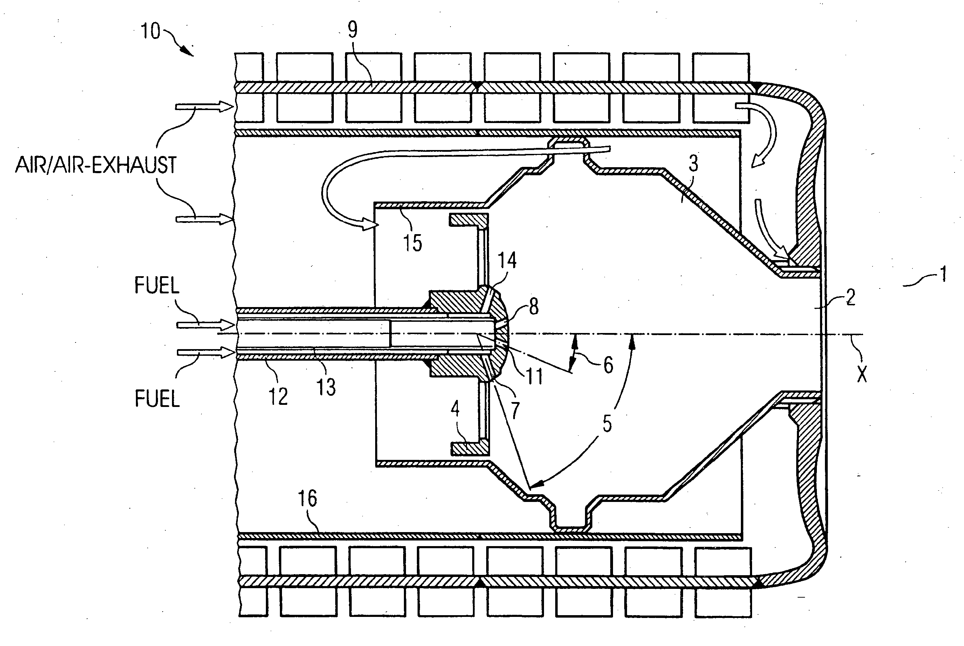

In the following, the invention will be described by means of examples with the help of the appended figure, which shows a first exemplary example of the industrial burner.

### DETAILED DESCRIPTION OF A PREFERRED EMBODIMENT OF

### THE PRESENT INVENTION

The industrial burner 10 shown in the Figure is configured as a recuperator burner. In addition to the use of the inventive industrial burner for a recuperator burner, the use as a high-speed burner, with or without external air pre-heating, as a regenerative burner in industrial furnace construction and the like is also conceivable.

The recuperator burner 10 illustrated in the Figure possesses a mixing chamber 3 designed so as to be rotationally-symmetric and/or substantially rotationally-symmetric about an axis X defined in the axial direction of the assembly; the mixing chamber 3 opens downstream into a furnace room 1 or a heating room through an opening 2 that can be designed as a nozzle. The boundary of the furnace room 1 is not illustrated in the Figure. A combustion air supplier 15, which is co-axial to the mixing chamber 3, is attached upstream with respect to the mixing chamber 3, which in this embodiment is an integral, and thus one-piece, construction; air or a partial air amount and/or in the case of a recuperator burner, e.g. an air-/exhaust mixture, is supplied through the combustion air supplier 15 into the mixing room formed by the mixing chamber 3. Moreover, the combustion air supplier 15 is completed by a pipe 16 surrounding the outside of the mixing chamber 3; the combustion air flows through the pipe 16 into the pipe-shaped combustion air supplier 15 and the mixing chamber 3. The pipe 16 and the combustion air supplier 15 are likewise concentric to the rotational axis X.

For supplying the fuel, which can in principle be any kind of fuel, i.e. also oil-based or solid fuels in addition to gaseous fuels, fuel lances 12, 13 are provided that are arranged concentrically with respect to each other such that the fuel lance 12 surrounds the fuel lance 13. Both fuel lances 12, 13 open at their downstream ends into the mixing chamber 3 at approximately the same distance from the opening 2 in the axial direction. In particular, the fuel lances 12, 13 open approximately at the junction of the combustion air supplier 15 and the mixing chamber 3. The fuel lances 12, 13 are integrated into the system such that fuel can be supplied through one of the lances as a function of the respective other lance and the amount of the fuel flow can be adjusted. This means that the fuel flows through the lance 12 and/or through the lance 13 are freely adjustable independent from each other and thus any arbitrary mixing ratio of the fuel flows can be supplied through the lances 12, 13 and can be dispensed therefrom.

The fuel lance 12 that surrounds the fuel lance 13 opens into the mixing chamber 3 through nozzle openings 14, which are provided in a mixing device 4 as passage openings through the cup-shaped mixing device. The mixing device 4 is mounted and affixed to the downstream end of the fuel lances 12, 13. Fuel is dispensed through fuel lance 12 into the mixing chamber 3 at a first angle 5. The first angle 5 is the angle that each nozzle opening 14 forms with the rotational axis X of the mixing chamber 3. The fuel lance 12, the mixing device 4 and in particular the nozzle openings 14 provided therein, as well as a not-illustrated control- and regulation-device for supplying fuel through the fuel lance 12, form a first fuel supply device 7.

The second fuel lance 13 opens into the mixing chamber 3 through the nozzle openings 11 that are similarly provided in the mixing device 4, like the nozzles 14, approximately at the same axial distance from the opening 2. However, the nozzles 11 are arranged at a second angle 6 to the rotational-symmetry axis X of the mixing chamber 3. The second angle 6 is different from the first angle 5. In particular, the angle 6 is smaller than the angle 5. The fuel lance 13, the nozzles 11 and a not-illustrated regulation- and control-device for regulating and controlling the supply of fuel through the fuel lance 13 form a second fuel supply device 8.

As a whole, the fuel supply devices 7, 8 are likewise disposed concentrically with respect to the rotational axis X of the mixing chamber 3. The combustion air and/or the mixture of exhaust gas and combustion air flow(s) radially outside the fuel lances 12, 13 into the mixing chamber 3 and thus, if necessary, can pass into the mixing device 4 through appropriate flow direction devices.

According to the illustrated embodiment, a corrugated recuperator 9 is provided so as to surround the pipe 16 and is likewise rotationally-symmetrically formed; the corrugated recuperator 9 is perfused radially outside by exhaust gases flowing from the furnace room 1 in the counter-direction and radially inside by at least the large part of the in-flowing combustion air or an air-/exhaust gas mixture. The combustion air flowing past the recuperator 9 encounters the exhaust gases from the furnace room in a heat exchange relationship and is pre-heated; thereafter, it returns to the interior of the pipe 16 for the combustion air supplier 15 and is at least partially supplied into the mixing chamber 3.

When fuel is supplied through the fuel lance 12 via the nozzle openings 14 into the mixing chamber 3 in a first operation state, heating up the furnace, the fuel can be mixed with the combustion air in the mixing chamber 3 due to the relatively severely radially-outwardly directed supply device for the fuel and forms a reaction-capable and ignitable mixture already in the mixing chamber 3. The mixture can be ignited in the mixing chamber 3 by (not-illustrated) ignition devices. It forms a flame there. Only a small amount or no fuel is supplied through the fuel lance 13 in this operation state. The flame reaches through the opening 2, so that the main combustion takes place in the furnace room 1 downstream of the opening 2.

As a result, the flame stabilizes itself in the mixing chamber, because a stable mixing of the combustion air and fuel is already achieved during the heating up process due to the clever selection of the angle 5, approximately in the range of 70-80° with respect to the axis X.

When it is ascertained in the mixing chamber 3 that the heating up process has been sufficiently performed, based upon the detection of the temperature in the mixing chamber, e.g. at 800°C, or based upon a monitoring of the flow processes by means of ionization or a UV-probe, it is switched to the second operation manner. In this second operation manner, fuel is introduced into the mixing chamber 3 through the fuel lance 13 and the nozzle openings 11. In addition, fuel can also be introduced, as necessary and preferably at a lower proportion, into the mixing chamber 3 through the fuel lance 12 and the nozzles 14. Because the fuel supplied into the mixing chamber 3 through the fuel lance 13 is dispensed at the nozzle openings 11 at a smaller angle 6 with respect to the rotational axis X, e.g. at an angle of approximately 20-30°, an equally-thorough mixing with the combustion air flowing in radially outside of the fuel supplier does not take place as in the first operation state. Nevertheless, fuel and air are mixed in the mixing chamber 3 so that at least a balanced, reaction-capable mixture is present in the mixing chamber. However, ,a thorough mixing is preferably not performed so as to cause the mixture to become ignition-capable; instead, a pre-mixed and/or partially pre-mixed fuel flow is dispensed from the mixing chamber opening 2, which fuel flow does not chemically react at all, or only in a very small proportion, inside the mixing chamber 3 during the second operation state. By monitoring the flow conditions into the mixing chamber 3 by means of ionization or a UV-probe, it is possible to calibrate the proportion of the fuel supplied through the fuel lance 12 and the nozzle openings 14 so that a desired mixing and/or a desired flow influence, which is adapted to the instantaneous operation state, takes place in the mixing chamber 3.

Essential to the invention is that a device is provided that allows fuel to be introduced into the mixing chamber with different impulses as a function of the operation state of the burner and always spaced from the opening of a mixing chamber into a furnace room; thus, the mixing can be influenced, as desired, by the combustion air supplied into the mixing chamber radially outside of the fuel.

## Claims

1. An industrial burner, comprising:
- a mixing chamber (3) provided with at least one opening (2) into a furnace room (1), through which opening (2) at least a partially-mixed fuel flow from the mixing chamber (3) dispenses into the furnace room (1) during operation;
- a combustion air supplier (15), through which the mixing chamber (3) is supplied with combustion air during operation;
- a mixing device (4);
- a fuel supplier (7, 8) adapted to switch between a first, heating up-operation state and a second operation state, the fuel supplier (7, 8) including a first fuel lance (12) and a second fuel lance (13),
wherein:
the first fuel lance (12) is connected at its mixing chamber side with the mixing device (4);
the first fuel lance (12) is provided with one or more nozzle openings (14) provided at a first angle (5) with respect to the axial direction of the mixing chamber (3) for introducing fuel into the mixing chamber (3) at the first angle (5);
the first fuel lance (12) is adapted to introduce fuel, in the first, heating up-operation state, into the mixing chamber (3) at an axial distance with respect to the opening (2) of the mixing chamber (3) into the furnace room (1) at the first angle (5) such that fuel and air are mixed in the mixing chamber (3) and at least a partial reaction is carried out therein;
the first fuel lance (12) is co-axially attached to and surrounds the second fuel lance (13);
the second fuel lance (13) is connected at its mixing chamber side with the mixing device (4);
the second fuel lance (14) is provided with one or more nozzle openings (11) provided at a second angle (6) with respect to the axial direction of the mixing chamber (3), which second angle (6) is different from the first angle (5), for introducing fuel into the mixing chamber (3) at the second angle (6);
the second fuel lance (13) is adapted to introduce fuel, in the second operation state, into the mixing chamber (3) at substantially the same axial distance with respect to the opening (2) as in the first operation state at least at the second angle (6);
the fuel flows through the first fuel lance (12) and second fuel lance (13) are freely adjustable independent from each other and thus any arbitrary mixing ratio of the fuel flows can be supplied through the lances (12, 13) and can be dispensed therefrom.

2. The industrial burner (10) according to claim 1, wherein in the first operation state, fuel is introduced into the mixing chamber (3) only through the first fuel lance (12), whereas in the second operation state, the fuel is introduced at a proportion of 10 to 100%, preferably 50 to 100% while the rest of the total fuel flow is introduced through the first fuel lance (12).

3. The industrial burner (10) according to one of the preceding claims, wherein the first angle (5) is larger than the second angle (6).

4. The industrial burner (10) according to one of the preceding claims, wherein a device is provided in the mixing chamber (3) for monitoring the combustion and/or the mixture.

5. A method for operating an industrial burner comprising a mixing chamber (3) having an axial direction, the mixing chamber (3) being provided with at least one opening (2) into a furnace room (1), through which opening (2) at least a partially-mixed fuel-air-flow from the mixing chamber (3) dispenses into the furnace room during operation, a combustion air supplier (15), through which the mixing chamber (3) is supplied with combustion air during operation, a fuel supplier (7, 8) adapted to switch between a first, heating up-operation state and a second operation state, the fuel supplier (7, 8) including a first fuel lance (12) and a second fuel lance (13), the first fuel lance (12) being connected at its mixing chamber side with a mixing device (4), the first fuel lance (12) being provided with one or more nozzle openings (14) provided at a first angle (5) with respect to the axial direction of the mixing chamber (3) for introducing fuel into the mixing chamber (3) at the first angle (5), the first fuel lance (12) being co-axially attached to and surrounding the second fuel lance (13); the second fuel lance (13) being connected at its mixing chamber side with the mixing device (4)
and the second fuel lance (14) being provided with one or more nozzle openings (11) provided at a second angle (6) with respect to the axial direction of the mixing chamber (3), which second angle (6) is different from the first angle (5), for introducing fuel into the mixing chamber (3) at the second angle (6), the method comprising at least the steps of:
- continually supplying the mixing chamber (3) with combustion air,
- freely adjusting the fuel flows through the first fuel lance (12) and second fuel lance (13) independent from each other;
- introducing fuel into the mixing chamber (3) in a first, heating up operation state at an axial distance with respect to the opening (2) into the furnace room (1) only at a first angle (5) such that fuel and air are mixed in the mixing chamber (3) and at least a partial reaction is carried out therein;
- switching from the first, heating up-operation state into a second operation state; and
- introducing fuel into the mixing chamber (3) in the second operation state at substantially the same axial distance with respect to the opening (2) of the mixing chamber (3) into the furnace room (1) as in the first operation state at least at a second angle (6) with respect to the axial direction of the mixing chamber (3), such that the fuel and combustion air are premixed in the mixing chamber (3) and the combustion is substantially shifted into the furnace room (1).

6. The method according to claim 5, wherein the amount of fuel introduced at the second angle (6) is in the range of 10 to 100% of the total fuel flow introduced into the mixing chamber (3) at the first and the second angle (6) such that fuel and combustion air are pre-mixed in the mixing chamber (3) and are combusted at least partially in the furnace room (1).

7. The method according to claim 6, wherein the amount of fuel supplied through the first fuel lance (12) and the amount of fuel supplied through the second fuel lance (13) are controlled as a function of the flow ratio into the mixing chamber (3) that is detected by a device for monitoring the mixture/combustion.

8. The method according to claim 6, wherein in the first operation state, fuel is introduced into the mixing chamber (3) only through the first fuel lance (12), and in the second operation state, fuel is introduced into the mixing chamber (3) only through the second fuel lance (13).

## Patentansprüche

1. Industriebrenner mit:
- einer Mischkammer (3), die mit wenigstens einer Mündung (2) in einen Ofenraum (1) versehen ist, durch die im Betrieb ein zumindest teilvorgemischter Brennstoffstrom aus der Mischkammer (3) in den Ofenraum (1) austritt;
- einer Verbrennungsluftzuführung (15), mit der die Mischkammer (3) im Betrieb mit Verbrennungsluft versorgt wird;
- einer Mischeinrichtung (4);
- einer Brennstoffzuführung (7, 8), die dazu angepasst ist, zwischen einem ersten, Aufheiz-Betriebszustand und einem zweiten Betriebszustand umzuschalten, wobei die Brennstoffzuführung (7, 8) eine erste Brennstofflanze (12) und eine zweite Brennstofflanze (13) aufweist,
wobei:
die erste Brennstofflanze (12) an ihrem mischkammerseitigem Ende mit der Mischeinrichtung (4) verbunden ist;
die erste Brennstofflanze (12) eine oder mehrere unter einem ersten Winkel (5) zur Axialrichtung der Mischkammer (3) vorhandene Düsenöffnungen (14) aufweist zum Einbringen von Brennstoff in die Mischkammer (3) unter dem ersten Winkel (5);
die erste Brennstofflanze (12) dazu angepasst ist, dass im ersten, Aufheiz-Betriebszustand Brennstoff bei einer axialen Position bezüglich der Mündung (2) der Mischkammer (3) in den Ofenraum (1) unter dem ersten Winkel (5) derart in die Mischkammer (3) eingebracht wird, dass Brennstoff und Luft in der Mischkammer (3) vermischt werden und zumindest eine Teilreaktion vollziehen;
die erste Brennstofflanze (12) koaxial zur zweiten Brennstofflanze (13) angebracht ist und diese umschließt;
die zweite Brennstofflanze (13) an ihrem mischkammerseitigem Ende mit der Mischeinrichtung (4) verbunden ist;
die zweite Brennstofflanze (14) eine oder mehrere unter einem zweiten Winkel (6) zur Axialrichtung der Mischkammer (3) vorhandene Düsenöffnungen (11) aufweist, wobei der zweite Winkel (6) vom ersten Winkel (5) verschieden ist, zum Einbringen von Brennstoff in die Mischkammer (3) unter dem zweiten Winkel (6);
die zweite Brennstofflanze (13) dazu ausgebildet ist, Brennstoff in dem zweiten Betriebszustand bei im Wesentlichen gleicher axialer Position bezüglich der Mündung (2) wie im ersten Betriebszustand zumindest unter dem zweiten Winkel (6) in die Mischkammer (3) einzubringen;
die Brennstoffströme durch die erste Brennstofflanze (12) und die zweite Brennstofflanze (13) unabhängig voneinander frei einstellbar sind und somit ein beliebiges Mischungsverhältnis der durch die Lanzen (12, 13) zugeführten und von ihnen austretenden Brennstoffströme eingestellt werden kann.

2. Industriebrenner (10) nach Anspruch 1, wobei im ersten Betriebszustand Brennstoff nur durch die erste Brennstofflanze (12) in die Mischkammer (3) eingebracht wird, während im zweiten Betriebszustand der Brennstoff in einem Anteil von 10 bis 100%, vorzugsweise von 50 bis 100% eingebracht wird, während der Rest des Gesamtbrennstoffstroms durch die erste Brennstofflanze (12) eingebracht wird.

3. Industriebrenner (10) nach einem der vorhergehenden Ansprüche, wobei der erste Winkel (5) größer als der zweite Winkel (6) ist.

4. Industriebrenner (10) nach einem der vorhergehenden Ansprüche, wobei in der Mischkammer (3) eine Einrichtung zur Überwachung der Verbrennung und/oder Mischung vorgesehen ist.

5. Verfahren zum Betreiben eines Industriebrenners mit einer eine Axialrichtung aufweisenden Mischkammer (3), die mit wenigstens einer Mündung (2) in einen Ofenraum (1) versehen ist, durch die im Betrieb ein zumindest teilvorgemischter Brennstoff-Luft-Strom aus der Mischkammer (3) in den Ofenraum austritt, einer Verbrennungsluftzuführung (15), mit der die Mischkammer (3) im Betrieb mit Verbrennungsluft versorgt wird, einer Brennstoffzuführung (7, 8), die dazu angepasst ist, zwischen einem ersten, Aufheiz-Betriebszustand und einem zweiten Betriebszustand umzuschalten, wobei die Brennstoffzuführung (7, 8) eine erste Brennstofflanze (12) und eine zweite Brennstofflanze (13) aufweist, die erste Brennstofflanze (12) an ihrem mischkammerseitigem Ende mit der Mischeinrichtung (4) verbunden ist, die erste Brennstofflanze (12) eine oder mehrere unter einem ersten Winkel (5) zur Axialrichtung der Mischkammer (3) vorhandene Düsenöffnungen (14) aufweist zum Einbringen von Brennstoff in die Mischkammer (3) unter dem ersten Winkel (5), die erste Brennstofflanze (12) koaxial zur zweiten Brennstofflanze (13) angebracht ist und diese umschließt, die zweite Brennstofflanze (13) an ihrem mischkammerseitigem Ende mit der Mischeinrichtung (4) verbunden ist, und die zweite Brennstofflanze (14) eine oder mehrere unter einem zweiten Winkel (6) zur Axialrichtung der Mischkammer (3) vorhandene Düsenöffnungen (11) aufweist, wobei der zweite Winkel (6) vom ersten Winkel (5) verschieden ist, zum Einbringen von Brennstoff in die Mischkammer (3) unter dem zweiten Winkel (6), wobei das Verfahren zumindest die Schritte aufweist:
- andauerndes Beaufschlagen der Mischkammer (3) mit Verbrennungsluft,
- unabhängig voneinander freies Einstellen der Brennstoffströme durch die erste Brennstofflanze (12) und die zweite Brennstofflanze (13);
- Einbringen von Brennstoff in die Mischkammer (3) in einem ersten, Aufheiz-Betriebszustand bei einer axialen Position bezüglich der Mündung (2) in den Ofenraum (1) nur unter einem ersten Winkel (5), sodass Brennstoff und Luft in der Mischkammer (3) vermischt werden und zumindest eine Teilreaktion vollziehen;
- Umschalten von dem ersten, Aufheiz-Betriebszustand in den zweiten Betriebszustand; und
- Einbringen von Brennstoff in die Mischkammer (3) in dem zweiten Betriebszustand bei im Wesentlichen gleicher axialer Position bezüglich der Mündung (2) der Mischkammer (3) in den Ofenraum (1) wie im ersten Betriebszustand zumindest unter einem zweiten Winkel (6) zur Axialrichtung der Mischkammer (3) derart, dass Brennstoff und Verbrennungsluft in der Mischkammer (3) vorgemischt werden und die Verbrennung im Wesentlichen in den Ofenraum (1) verlagert wird.

6. Verfahren nach Anspruch 5, wobei die unter dem zweiten Winkel (6) eingebrachte Brennstoffmenge im Bereich von 10 bis 100% des unter dem ersten und zweiten Winkel (6) in die Mischkammer (3) eingebrachten Gesamtbrennstoffstroms ist, sodass Brennstoff und Verbrennungsluft in der Mischkammer (3) vorgemischt werden und zumindest teilweise im Ofenraum (1) verbrannt werden.

7. Verfahren nach Anspruch 6, wobei die Menge des durch die erste Brennstofflanze (12) und die Menge des durch die zweite Brennstofflanze (13) zugeführten Brennstoffs in Abhängigkeit von dem durch die Einrichtung zur Überwachung der Mischung/Verbrennung erfassten Strömungsverhältnis in der Mischkammer (3) geregelt werden.

8. Verfahren nach Anspruch 6, wobei im ersten Betriebszustand Brennstoff nur durch die erste Brennstofflanze (12) und im zweiten Betriebszustand Brennstoff nur durch die zweite Brennstofflanze (13) in die Mischkammer (3) eingebracht wird.

## Revendications

1. Un brûleur industriel, comprenant :
- une chambre de mélange (3) équipée d'au moins une ouverture (2) dans une chaufferie (1), ouverture (2) à travers laquelle au moins un flux de carburant partiellement mélangé provenant de la chambre de mélange (3) passe dans la chaufferie (1) durant le fonctionnement ;
- une alimentation en air de combustion (15), à travers laquelle la chambre de mélange (3) est alimentée en air de combustion durant le fonctionnement ;
- un dispositif de mélange (4) ;
- une alimentation en carburant (7, 8) adaptée pour commuter entre un premier état de fonctionnement en chauffage et un deuxième état de fonctionnement, l'alimentation en carburant (7, 8) comprenant un premier injecteur de carburant (12) et un deuxième injecteur de carburant (13),
dans lequel :
le premier injecteur de carburant (12) est connecté au niveau de l'extrémité latérale du dispositif de mélange (4) ;
le premier injecteur de carburant (12) est équipé d'une ou plusieurs ouvertures de conduit (14) fournies au niveau d'un premier angle (5) par rapport à la direction axiale de la chambre de mélange (3) pour introduire du carburant dans la chambre de mélange (3) au niveau du premier angle (5) ;
le premier injecteur de carburant (12) est adapté pour introduire du carburant dans le premier état de fonctionnement de chauffage, dans la chambre de mélange (3) à une distance axiale par rapport à l'ouverture (2) de la chambre de mélange (3) dans la chaufferie (1) au niveau du premier angle (5) de sorte que le carburant et l'air sont mélangés dans la chambre de mélange (3) et au moins une réaction partielle est réalisée à l'intérieur ;
le premier injecteur de carburant (12) est attaché co-axialement à et autour du deuxième injecteur (13) ;
le deuxième injecteur de carburant (13) est connecté à l'extrémité latérale de la chambre de mélange avec le dispositif de mélange (4) ;
le deuxième injecteur de carburant (14) est équipé d'une ou de plusieurs ouvertures de conduit (11) disposées au niveau d'un deuxième angle (6) par rapport à la direction axiale de la chambre de mélange (3), ledit deuxième angle (6) étant différent du premier angle (5), pour introduire du carburant dans la chambre de mélange (3) au niveau du deuxième angle (6) ;
le deuxième injecteur de carburant (13) est adapté pour introduire du carburant,
dans le deuxième état de fonctionnement, dans la chambre de mélange (3) sensiblement à la même distance axiale par rapport à l'ouverture (2) que dans le premier état de fonctionnement au moins au niveau du deuxième angle (6) ;
les flux de carburant à travers le premier injecteur de carburant (12) et le deuxième injecteur de carburant (13) sont librement ajustables indépendamment l'un de l'autre et de sorte que n'importe quel ratio de mélange arbitraire de flux de carburant peut être fourni à travers les injecteurs (12, 13) et peut être dispensé à partir de là.

2. Le brûleur industriel (10) selon la revendication 1, dans lequel dans le premier état de fonctionnement, du carburant est introduit dans la chambre de mélange (3) seulement à travers le premier injecteur de carburant (12), tandis que dans le deuxième état de fonctionnement, le carburant est introduit selon une proportion de 10 à 100%, de préférence de 50 à 100% pendant que le reste du flux total de carburant est introduit à travers le premier injecteur de carburant (12).

3. Le brûleur industriel (10) selon l'une quelconque des revendications précédentes, dans lequel le premier angle (5) est plus large que le deuxième angle (6).

4. Le brûleur industriel (10) selon l'une quelconque des revendications précédentes, dans lequel un dispositif est fourni dans la chambre de mélange (3) pour contrôler la combustion et/ou le mélange.

5. Une méthode pour faire fonctionner un brûleur industriel comprenant une chambre de mélange (3) ayant une direction axiale, la chambre de mélange (3) étant munie d'au moins une ouverture (2) dans une chaufferie (1), ouverture (2) à travers laquelle au moins un flux air-carburant partiellement mélangé provenant de la chambre de mélange (3) passe dans la chaufferie pendant le fonctionnement, une alimentation en air de combustion (15), à travers laquelle la chambre de mélange (3) est alimentée avec de l'air de combustion durant le fonctionnement, une alimentation en carburant (7, 8) adaptée à commuter entre un premier état de fonctionnement de chauffage et un deuxième état de fonctionnement, l'alimentation en carburant (7, 8) comprenant un premier injecteur de carburant (12) et un deuxième injecteur de carburant (13), le premier injecteur de carburant (12) étant connecté à l'extrémité latérale de la chambre de mélange avec un dispositif de mélange (4), le premier injecteur de carburant (12) étant équipé d'une ou plusieurs ouvertures de conduit (14) prévues au niveau d'un premier angle (5) par rapport à la direction axiale de la chambre de mélange (3) pour introduire du carburant dans la chambre de mélange (3) au niveau du premier angle (5), le premier injecteur de carburant (12) étant attaché co-axialement à et entourant le deuxième injecteur de carburant (13) ; le deuxième injecteur de carburant (13) étant connecté à l'extrémité latérale de la chambre de mélange avec le dispositif de mélange (4) et le deuxième injecteur de carburant (14) étant équipé avec une ou plusieurs ouvertures de conduit (11) fournies au niveau d'un deuxième angle (6) par rapport à la direction axiale de la chambre de mélange (3), le deuxième angle (6) étant différent du premier angle (5), pour introduire du carburant dans la chambre de mélange (3) au niveau du deuxième angle (6), la méthode comprenant au moins les étapes suivantes :
- continuellement alimenter la chambre de mélange (3) avec de l'air de combustion,
- librement ajuster les flux de carburant à travers le premier injecteur de carburant (12) et le deuxième injecteur de carburant (13) indépendamment l'un de l'autre ;
- introduire du carburant dans la chambre de mélange (3) dans un premier état de fonctionnement de chauffage au niveau d'une distance axiale par rapport à l'ouverture (2) dans la chaufferie (1) seulement au niveau du premier angle (5) de sorte que du carburant et de l'air sont mélangés dans la chambre de mélange (3) et au moins une réaction partielle est réalisée à l'intérieur ;
- commuter du premier état de fonctionnement de chauffage à un deuxième état de fonctionnement ; et
- introduire du carburant dans la chambre de mélange (3) dans le deuxième état de fonctionnement sensiblement au niveau de la même distance axiale par rapport à l'ouverture (2) de la chambre de mélange (3) dans la chaufferie (1) que dans le premier état de fonctionnement au moins au niveau d'un deuxième angle (6) par rapport à la direction axiale de la chambre de mélange (3), de sorte que le carburant et l'air de combustion sont pré-mélangés dans la chambre de mélange (3) et la combustion est substantiellement déplacée dans la chaufferie (1).

6. La méthode selon la revendication 5, dans laquelle la quantité de carburant introduit au niveau du deuxième angle (6) est dans l'intervalle entre 10 et 100% du flux total de carburant introduit dans la chambre de mélange (3) au niveau du premier et du deuxième angle (6) de sorte que le carburant et l'air de combustion sont prémélangés dans la chambre de mélange (3) et sont brûlés au moins partiellement dans la chaufferie (1).

7. La méthode selon la revendication 6, dans laquelle la quantité de carburant fournie à travers le premier injecteur de carburant (12) et la quantité de carburant fournie à travers le deuxième injecteur de carburant (13) sont contrôlées comme une fonction du ratio de flux dans la chambre de mélange (3) qui est détecté par un dispositif pour contrôler le mélange/combustion.

8. La méthode selon la revendication 6, dans laquelle dans le premier état de fonctionnement, du carburant est introduit dans la chambre de mélange (3) seulement à travers le premier injecteur de carburant (12), et dans le deuxième état de fonctionnement, du carburant est introduit dans la chambre de mélange (3) seulement à travers le deuxième injecteur de carburant (13).
